# FASCICULE DE BREVET EUROPEEN

(11) **EP 1 003 135 B1**
(45) Date de publication et mention de la délivrance du brevet: **17.01.2007**
(21) Numéro de dépôt: 99402893.4
(22) Date de dépôt: 22.11.1999
(51) Int. Cl.: G07F 7/10

(54) **Terminal de traitement d'informations et de paiement électronique**
Terminal zum Verarbeiten von Informationen und elektronischen Bezahlen
Terminal for information processing and electronic payment

(30) Priorité: 20.11.1998 FR 9814625
(43) Date de publication de la demande: 24.05.2000
(73) Titulaire: SAGEM Défense Sécurité, 75015 Paris (FR)
(72) Inventeur: Sarradin, Jean-Louis, 95190 Fontenay en Parisis (FR)
(74) Mandataire: Bloch, Gérard

(56) Documents cités:
- EP-A- 0 193 920
- EP-A- 0 413 822
- WO-A-82/03288
- WO-A-88/03297
- WO-A-90/00782
- GB-A- 2 274 009
- US-A- 4 868 900

## Description

Un terminal de paiement électronique, installé chez un commerçant, permet au porteur d'une carte bancaire d'effectuer des achats par transfert électronique d'argent de son compte bancaire à celui du commerçant.

Des sécurités sont prévues pour éviter toute erreur ou fraude lors de telles opérations. Ainsi, le terminal n'accepte que les cartes bancaires validées par un code confidentiel que le porteur de la carte doit saisir par un clavier du terminal. De même, le commerçant est identifié par une carte spéciale.

Le terminal mémorise temporairement les transactions, c'est-à-dire les parties d'opération se déroulant jusqu'à l'édition des tickets, pour les transmettre périodiquement, par le réseau téléphonique, à un centre de télécollecte et de traitement qui en assure la mémorisation définitive et l'exécution.

Le terminal a aussi en mémoire un numéro d'appel d'un centre d'autorisation pour pouvoir éventuellement effectuer des transactions dépassant un plafond.

Depuis le centre de télécollecte, le terminal est initialement configuré par téléchargement de données d'initialisation relatives au commerçant, comme son identité bancaire, et aussi relatives aux échanges avec les centres ci-dessus, tels que numéros de téléphone, nombre maximal de tentatives d'appel, liste noire des cartes bancaires interdites et autres.

Les documents WO90/00782 et EP0626664 décrivent des réalisations de terminaux de traitements d'information selon l'art antérieur.

Cependant, en cas d'échange standard du terminal, suite à une panne, ou en cas de traitement de cartes bancaires autres que celles prévues, il faut rappeler le centre de télécollecte pour réinitialiser le terminal.

La présente invention vise à s'affranchir de la contrainte qu'imposent de telles réinitialisations.

Le problème des réinitialisations ne se posant pas qu'avec les terminaux de paiement électronique, la demanderesse entend d'ailleurs élargir la portée de sa demande à tout terminal de traitement d'informations.

A cet effet, l'invention concerne un terminal de traitement d'informations comportant des moyens de liaison avec un centre de téléchargement de données d'initialisation et des moyens de mémorisation des données, terminal caractérisé par le fait que les moyens de mémorisation de données comportent des moyens d'exploitation de moyens mémoires amovibles.

Naturellement, l'invention s'applique parfaitement à des terminaux de paiement électronique.

Ainsi, les données d'initialisation fournies par le centre de téléchargement, qui particularisent le terminal, peuvent être initialement mémorisées en mémoire amovible et être ensuite localement fournies au terminal, en y implantant la mémoire amovible voulue, éventuellement transplantée depuis un autre terminal.

Le terminal est donc construit en associant une partie banalisée, formée du matériel et de logiciels standards résidents éventuels, et une partie spécifique amovible à mémoire, qui peut être associée avec toute partie banalisée de tels terminaux.

Avantageusement, les moyens d'exploitation comportent un lecteur de carte à puce qui, de préférence, est agencé pour recevoir une carte SIM (module d'identification d'abonné). La carte SIM constitue ainsi une mémoire facilement transportable.

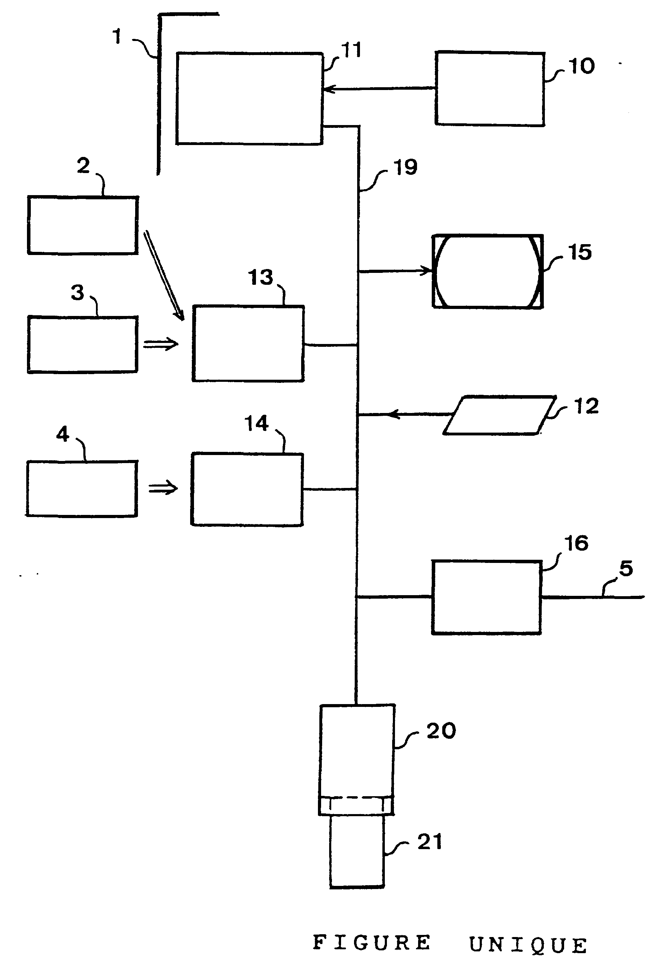

L'invention sera mieux comprise à l'aide de la description suivante d'une forme de réalisation préférée du terminal de traitement d'informations de l'invention, en référence à la figure unique en annexe.

Le terminal de traitement d'informations, référencé 1 sur la figure, est ici un terminal de paiement électronique agencé pour recevoir, de façon classique, une carte bancaire 2 à puce et/ou piste d'un client, ou carte porteur, une carte spéciale commerçant 3 et une carte sécuritaire commerçant 4. Il est relié, de façon fixe ou amovible, à une ligne 5 du réseau téléphonique commuté pour dialoguer avec un centre de télécollecte et téléchargement, non représenté.

Le terminal 1 comporte une base de temps 10 rythmant le fonctionnement d'un microprocesseur 11 avec mémoire qui règle le fonctionnement des divers circuits du terminal 1, reliés au microprocesseur 11 par un bus 19.

Un lecteur de carte 13 permet d'exploiter les cartes 2 et 3 et d'inscrire le montant des transactions et un lecteur 14 est réservé à la carte 4, selon les flèches de la figure. Un clavier 12, relié au microprocesseur 11 par le bus 19, permet de saisir les commandes voulues pour effectuer les séquences d'opérations pour une transaction, et en particulier un code confidentiel client associé à la carte 2. Le microprocesseur 11 commande un écran 15 visualisant les diverses étapes et guidant les opérateurs, client et commerçant. Un modem 16 relie le microprocesseur 11 à la ligne 5.

Le microprocesseur 11 est aussi relié à un circuit d'interface 20 agencé pour exploiter une mémoire amovible 21 qu'il reçoit, c'est-à-dire la lire et éventuellement y écrire des données. Dans cet exemple le circuit d'interface 20 est un lecteur de carte à puce exploitant une carte 21 de type SIM ou micro SIM.

Pour initialiser le terminal 1, le commerçant commande, par le clavier 12 et le microprocesseur 11, un appel du centre de télécollecte et téléchargement par la ligne 5. Ce dernier fournit en réponse des données d'initialisation du terminal 1, permettant son exploitation, telles que numéro d'un centre d'autorisation de transactions, fréquence des appels de télécollecte, heure d'appel, liste noire des cartes 2 et autres. Pour plus de précisions, on se reportera au "Manuel du paiement électronique" et au "Protocole de Transmission avec les Centres de Traitement et d'Autorisation" édités par le Groupement des Cartes Bancaises "CB".

Les données d'initialisation reçues par le terminal 1 sont mémorisées dans une mémoire, associée à un microprocesseur, de la carte SIM 21. En variante, il aurait pu être prévu un connecteur ou support de circuit intégré (tel que douilles de réception et de connexion des broches du circuit intégré) recevant un bloc mémoire pouvant être écrit dans le terminal 1 et conservant les données même après mise hors tension, donc à fonction de mémoire morte inscriptible en fonctionnement. C'est par exemple une mémoire du genre Flash, capable, sous tension, de modifier le potentiel d'entrées de "caissons" de stockage de charges électriques, définissant chacune l'état d'un bit, pour remplir ou vider ces caissons en écriture. En l'absence d'alimentation, les caissons restent fermés et peuvent donc être lus, sans perte de données, lorsqu'ils sont à nouveau alimentés, dans le terminal 1 ou dans un autre, semblable, qui le remplace. Une mémoire vive amovible à alimentation sauvegardée est de même envisageable. On peut par exemple penser à une mémoire CMOS associée à une pile.

## Revendications

1. Terminal de traitement d'informations comportant des moyens (11, 16) de liaison avec un centre de téléchargement de données et des moyens de mémorisation des données, terminal **caractérisé par le fait que** les moyens de mémorisation de données comportent des moyens (20) d'exploitation de moyens mémoires amovibles (21) et que les données sont des données d'initialisation.

2. Terminal selon la revendication 1, dans lequel les moyens d'exploitation comportent un lecteur (20) de carte à puce (21).

3. Terminal selon l'une des revendications 1 à 2, qui est un terminal de paiement électronique.

## Claims

1. Terminal for processing information and comprising means (11, 16) of linking with a centre for downloading data and means of memorising data, said terminal being **characterised in that** the data memorising means include means (20) of operating removable memory means (21) and **in that** the data are initialisation data.

2. Terminal according to claim 1 wherein the operating means comprise a chip card (21) reader (20).

3. Terminal according to one of claims 1 to 2 which is an electronic payment terminal.

## Patentansprüche

1. Endgerät zur Datenverarbeitung, das Einrichtungen (11, 16) zur Verbindung mit einer Zentrale zum Herunterladen von Daten und Speichereinrichtungen für die Daten umfasst, wobei das Endgerät **dadurch gekennzeichnet ist, dass** die Datenspeichereinrichtungen Aufbereitungseinrichtungen (20) für herausnehmbare Speichereinrichtungen (21) umfassen und die Daten Initialisierungsdaten sind.

2. Endgerät nach Anspruch 1, wobei die Aufbereitungseinrichtungen ein Lesegerät (20) für Chipkarten (21) umfassen.

3. Endgerät nach einem der Ansprüche 1 bis 2, bei dem es sich um ein Gerät zur elektronischer Zahlung handelt.
